# EUROPEAN PATENT APPLICATION

(11) **EP 1 983 749 A2**
(43) Date of publication of application: **22.10.2008**
(21) Application number: 08006996.6
(22) Date of filing: 08.04.2008
(51) Int. Cl.: H04N 7/14

(54) **Control device, mobile communication system, and communication terminal**

(30) Priority: 16.04.2007 JP 2007107397
(71) Applicant: NTT DoCoMo, Inc., Chiyoda-ku Tokyo 100-6150 (JP)
(72) Inventor: Kano, Izua, Sanno Park tower Tokyo 100-6150 (JP); Onda, Yasushi, Sanno park Tower Tokyo 100-6150 (JP); Murakami, Keiichi, Sanno park tower Tokyo 100-6150 (JP); Kamiya, Dai, Sanno park tower Tokyo 100-6150 (JP); Yamada, Kazuhiro, Sanno park tower Tokyo 100-6150 (JP); Yamada, Eiju, Chiyoda-ku Tokyo 100-6150 (JP)
(74) Representative: HOFFMANN EITLE

(57) **Abstract**

A control device, includes : a word storage means that stores a plurality of words; an obtaining means that obtains messages which are transmitted/received together with images between first and second communication terminals; a determination means that determines whether any of the plurality of words stored in the storage means is identical or similar to any of words included in the messages obtained by the obtaining means; and a control means that causes one or each of the first and second communication terminals to display either a camera image or a substitute image which is transmitted from the other of the first and second communication terminals, depending on a determination result of the determination means, the substitute image being substitutable for the camera image.

## Description

### Background

### 1. Technical Field

The present invention relates to a technique for making communications between users with use of images and text messages or voice messages.

### 2. Related Art

In recent years, mobile phones have been increasingly equipped with higher and higher functionality which enables flexible methods of communication in addition to voice communication. For example, mobile phones having a so-called TV phone function are capable of transmitting/receiving images of speakers' faces captured by built-in cameras, and are in prevalent use. There are known other mobiles phones which display images of predetermined character images during voice communication (for example, refer to JP-T-2004-5 37231 and JP-A-2004-297350). By using techniques as described above, more intimate and entertaining communication is achieved than in a case of only voice communication.

When communicating with an unidentified caller by use of a TV phone function, however, a face of a called person can undesirably be exposed to the caller without any restrictions. As a result, there is a risk that privacy can not satisfactorily be protected by use of only known TV phone functions. Meanwhile, speakers cannot have a feeling of intimacy through communication depending only on a function of simply displaying character images during TV phone communication, as disclosed in JP-T-2004-537231 and JP-A-2004-297350 mentioned above. Therefore, a further drawback to be taken into consideration is that communications are not promoted efficiently.

### Summary

The invention is directed to provision of a technique for promoting phone communication between speakers on the phone even while restricting use of images obtained of speakers.

According to one aspect of the invention, there is provided a control device, including: a word storage means that stores a plurality of words; an obtaining means that obtains messages which are transmitted/received together with images between first and second communication terminals; a determination means that determines whether any of the plurality-of words stored in the storage means is identical or similar to any of words included in the messages obtained by the obtaining means; and a control means that causes one or each of the first and second communication terminals to display either a camera image or a substitute image which is transmitted from the other of the first and second communication terminals, depending on a determination result of the determination means, the substitute image being substitutable for the camera image.

The control device configured as described above causes one of two communication terminals to display a camera image or a substitute image substitutable for the camera image, which is transmitted from the other of the two communication terminals. Accordingly, communications between speakers at the two communication terminals can be promoted while restricting use of camera images obtained of speakers.

Alternatively, the control device described above may be configured so that the control means is configured to cause the one or each of the first and second communication terminals to display the substitute image when transmission/reception of the images and messages is started between the first and second communication terminals; and after once causing the one or each of the first and second communication terminals to display the substitute image, the control means is configured to cause the one or each of the first and second communication terminals to display the camera image if any of the plurality of words stored in the word storage means is identical or similar to any of the words included in the messages obtained by the obtaining means.

Also alternatively, the control device described above may be configured so as to further include a history storage means that stores a history of transmission/reception between the first and second communication terminals, wherein if transmission/reception of the images and messages is started between the first and second communication terminals when the history of transmission/reception is not yet stored in the history storage means, the control means is configured to cause the one or each of the first and second communication terminals to display the substitute image, or if transmission/reception of the images and messages is started between the first and second communication terminals when the history of transmission/reception has been stored in the history storage means, the control means is configured to cause the one or each of the first and second communication terminals to display the camera image.

Also alternatively, the control device described above may be configured so that the control means causes the one or each of the first and second communication terminals to display the camera image when transmission/reception of the images and messages is started between the first and second communication terminals; and after once causing the one or each of the first and second communication terminals to display the camera image, the control means causes the one or each of the first and second communication terminals to display the substitute image if any of the plurality of words stored in the word storage means is identical or similar to any of the words included in the messages obtained by the obtaining means.

Also alternatively, the control device described above may be configured so that each of the first and second communication terminals is configured to store the substitute image to be displayed on the other of the first and second communication terminals as a transmission destination of the images and messages from the each of the first and second communication terminals; in a case of causing the one or each of the first and second communication terminals to display the camera image, the control means is configured to instruct the other of the first and second communication terminals to transmit the camera image and the messages, the camera image being shot by the other of the first and second communication terminals; and in a case of causing the one or each of the first and second communication terminals to display the substitute image, the control means is configured to instruct the other of the first and second communication terminals to transmit the substitute image and the messages, the substitute image being stored in the other of the first and second communication terminals.

Also alternatively, the control device described above may be configured so that each of the first and second communication terminals comprises an image storage that stores a plurality of substitute images, each of which can be displayed as the substitute image on the other of the first and second communication terminals; in a case of causing the one or each of the first and second communication terminals to display the camera image, the control means is configured to instruct the other of the first and second communication terminals to transmit the camera image and the messages, the camera image being shot by the other of the first and second communication terminals; and in a case of causing the one or each of the first and second communication terminals to display the substitute image, the control means is configured to notify the one or each of the first and second communication terminals, of one of the plurality of substitute images, which is specified by the other of the first and second communication terminals, and is configured to instruct the one or each of the first and second communication terminals to display the notified one of the plurality of substitute images stored in the image storage means of the one or each of the first and second communication terminals.

Also alternatively, the control device described above may be configured so as to include a substitute image storage means that stores substitute images to be displayed, each as the substitute image, respectively on the first and second communication terminals; in a case of causing the one or each of the first and second communication terminals to display the camera image, the control means is configured to instruct the other of the first and second communication terminals to transmit the camera image and the messages, the camera image being shot by the other of the first and second communication terminals; and in a case of causing the one or each of the first and second communication terminals to display the substitute image, the control means is configured to read the substitute image from among the substitute images stored in the substitute image storage means, and is configured to transmit the substitute image to the one or each of the first and second communication terminals.

Also alternatively, the control device described above may be configured so that the substitute images stored in the substitute image storage means are associated with identifiers assigned to the first and second communication terminals, respectively; and in the case of causing the one or each of the first and second communication terminals to display the substitute image, the control means is configured to read one of the substitute images associated with one of the identifiers which is assigned to the other of the first and second communication terminals, and is configured to transmit the read one of the substitute images to the one or each the first and second communication terminals.

According to another aspect of the invention, there is provided a mobile communication system, including: a word storage device that stores a plurality of words; an obtaining means that obtains messages which are transmitted/received together with images between first and second communication terminals; a determination device that determines whether any of the plurality of words stored in the storage device is identical or similar to any of words included in the messages obtained by the obtaining device; and a control device that causes one or each of the first and second communication terminals to display either a camera image or a substitute image which is transmitted from the other of the first and second communication terminals, depending on a determination result by the determination device, the substitute image being substitutable for the camera image.

In the communication system configured as described above, one of two communication terminals is caused to display a camera image or a substitute image substitutable for the camera image, which is transmitted from the other of the two communication terminals. Accordingly, communications between speakers on the two communication terminals can be promoted while restricting use of camera images obtained of the speakers.

According to yet another aspect of the invention, there is provided a communication terminal, including: an obtaining means that obtains a camera image shot by a pickup means; a substitute image storage means that stores a substitute image which is substitutable for the camera image; a transmission/reception means that transmits/receives images and messages to/from another mobile communication terminal as a communication partner; a display means that displays the images received by the transmission/reception means; a word storage means that stores a plurality of words; a determination means that determines whether any of the plurality of words stored in the word storage means is identical or similar to any of words included in the messages received by the transmission/reception means; and a selection means that selects one of the camera image obtained by the obtaining means and the substitute image stored in the substitute image storage means, depending on a determination result by the determination means, the selected one of the camera image and the substitute image to be transmitted through the transmission/reception means.

One of two communication terminals each configured as described above is caused to display a camera image transmitted from the other of the two communication terminals or a substitute image substitutable for the camera image. Accordingly, communications between speakers on the two communication terminals can be promoted while restricting use of camera images obtained of the speakers.

According to yet another aspect of the invention, there is provided a communication terminal, including: an obtaining means that obtains a camera image shot by a pickup means; a transmission/reception means that transmits/receives images and messages to/from another mobile communication terminal as a communication partner; a display means that displays the images received by the transmission/reception means; a storage means that stores a plurality of words; a determination means that determines whether any of the plurality of words stored in the storage means is identical or similar to any of words included in the messages received by the transmission/reception means; and a selection means that selects one of the camera image obtained by the obtaining means and a specification data set which specifies a substitute image substitutable for the camera image, depending on a determination result by the determination means, the selected one of the camera image and the specification data set to be transmitted through the transmission/reception means.

One of two communication terminals each configured as described above is caused to display a camera image transmitted from the other of the two communication terminals or a substitute image substitutable for the camera image. Accordingly, communications between speakers on the two communication terminals can be promoted while restricting use of camera images obtained of the speakers.

Alternatively, the communication terminal described above is configured to further include a substitute image storage means that stores a plurality of substitute images each of which can be displayed as the substitute image, wherein the display means is configured to display one of the plurality of substitute images stored in the substitute image storage means, which is specified by the specification data set received by the transmission/reception means, in place of one of the images received by the transmission/reception means.

### Brief Description of the Drawings

Embodiment of the invention will be described in detail with reference to the following figures, wherein:
FIG. 1 shows an entire configuration of a system according to an embodiment of the invention;
FIG. 2 is a block diagram showing a configuration of a control device;
FIG. 3 is a table showing a configuration of an avatar ID conversion table stored in the control device;
FIG. 4 shows a word management table stored in the control device;
FIG. 5 is a block diagram showing a configuration of a mobile communication terminal;
FIG. 6 shows operators included in the mobile communication terminal;
FIG. 7 shows a logical configuration of components established by the mobile communication terminal;
FIG. 8A shows an example of an avatar image, and FIG. 8B shows an example of a camera image;
FIG. 9 is a flowchart showing processings executed by the mobile communication terminal;
FIG. 10 shows an example of a screen image displayed on the mobile communication terminal;
FIG. 11 is another example of a screen image displayed on the mobile communication terminal;
FIG. 12 is a sequence chart showing processings executed by the mobile communication terminals and the control device;
FIG. 13 shows still another example of a screen image displayed on the mobile communication terminal;
FIG. 14 shows still another example of an image displayed on the mobile communication terminal;
FIG. 15 shows still another example of an image displayed on the mobile communication terminal;
FIG. 16 shows still another example of an image displayed on the mobile communication terminal;
FIG. 17 shows still another example of an image displayed on the mobile communication terminal; and
FIG. 18 shows still another example of an image displayed on the mobile communication terminal.

### Detailed Description

An embodiment of the invention will now be described with reference to the drawings.

In the description given below, the term "TV phone communications" refers to phone calls with use of images.

The term "image" is intended to cover both a still image and a video image.

The term "camera image" refers to a picked-up image which is shot by, as a typical example, a camera built into a communication terminal.

The term "avatar" refers to a character which symbolically represents a user of a communication terminal. Avatars are relatively frequently used in bidirectional communication services on the internet, such as for chat and bulletin board system. The term "avatar image" refers to an image expressing an avatar and is intended to cover, for example, images depicting a human face, a human figure, an animal, a robot, a virtual creature, etc.

In the present embodiment, all voice messages are obtained from when a TV phone communication is started between two communication terminals. The control device causes each of the communication terminals to display a camera image or an avatar image substitutable for the camera image, depending on whether an identical or similar word to any of plural pre-registered words is included in the obtained messages.

For example, each user pre-registers plural words which suit the user's own interests and preferences, i.e., own favorite words in the control device. Users start a TV phone communication using substitute images first. If any of the users says any of the plural pre-registered words of one of the communication partners after the TV phone communication is started, the substitute images are then switched to camera images at the terminals of the two users. In this case, there is found a need that a user wants to see the face of a communication partner if a communication partner to the user has a similar interest or preference to that of the user. Taken into consideration such a user's feeling, substitute images are switched to camera images depending on words which are spoken during a TV phone communication.

As another example, each of users pre-registers, in the control device, plural words which are considered inappropriate or imprudent in view of common sense, such as discriminatory terms or words which may make the other of the users as a communication partner uncomfortable. The users start a TV phone communication using camera images first. If any of the users as communication partners speaks any of the pre-registered inappropriate words, the camera images are then switched to substitute images. In this case, there is found a need that a user does not want to talk while looking at the face of a communication partner who makes the user feel uncomfortable. Taking into consideration such a user's feeling, camera images are switched to substitute images depending on words which are spoken during a TV phone communication.

### 1. Configuration

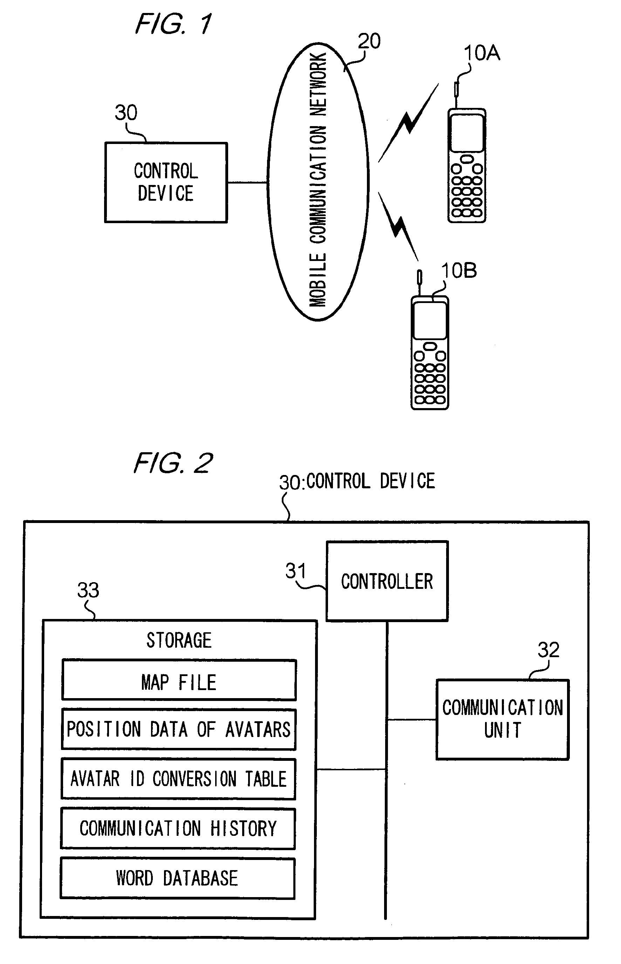

FIG. 1 schematically shows an entire configuration of a system according to an embodiment of the invention. As shown in FIG. 1, the system includes mobile communication terminals 10A and 10B, a mobile communication network 20, and a control device 30. Though this system may include a lot of mobile communication terminals, FIG. 1 shows only two mobile communication terminals as a communication source and a communication destination. In the description provided below, the mobile communication terminal 10A is a mobile communication terminal as a communication source, while the mobile communication terminal 10B is a mobile communication terminal as a communication destination. If the communication source and destination need not be distinguished from each other, the mobile communication terminals are collectively referred to as "mobile communication terminals 10".

The mobile communication network 20 is a network system which provides the mobile communication terminals 10 with mobile communication services. The mobile communication network 20 is managed by a communication service provider called a carrier. The mobile communication network 20 includes a base station, nodes such as switching centers and service control stations, and communication channels connecting the nodes to each other (not shown in the figures). The mobile communication network 20 transfers voice data, image data, and control data which are multiplexed in accordance with a predetermined protocol. A desirable protocol is, for example, 3G-324M standardized by 3GPP (3rd Generation Partnership Project). The service control stations store position registration information for each of the mobile communication terminals 10, information concerning contracts and fee charges for users of the mobile communication terminals 10, and phone numbers of the mobile communication terminals 10. The control device 30 is connected to the service control stations and the switching centers in the mobile communication network 20.

FIG. 2 is a block diagram showing a configuration of the control device 30. As shown in FIG. 2, the control device 30 has a controller 31, a storage 33, and a communication unit 32. The controller 31 includes a CPU (Central Processing Unit), a ROM (Read Only Memory), and a RAM (Random Access Memory). The CPU controls operations of respective components of the control device 30 by executing programs stored in the ROM and/or the storage 33, using the RAM as a work area. The storage 33 has a storage device such as a HDD (Hard Disk Drive). The storage 33 stores not only the programs executed by the controller 31 but also various data for establishing communications between the mobile communication terminals 10. The communication unit 32 is an interface device for making communications through the mobile communication network 20.

Data stored in the storage 33 will now be described.

The storage 33 stores a map file, position data for plural avatars, an avatar ID conversion table, question information; and various data for performing processings which will be described later, such as avatar image data sets. The map file is an aggregate of data for composing a virtual three-dimensional space (hereinafter simply referred to as a "virtual space") and includes object data sets, position information, and path information. The object data sets each define a shape and a color of an object, i.e., an exterior of an object. Each object data set is constituted of polygon data. Objects are limited to static objects whose positions are fixed in the virtual space and do not include dynamic objects such as avatars. The position information defines positions in the virtual space, based on a two-dimensional or three-dimensional coordinate system. Each of objects expressed by the object data sets is associated with the position information. The path information is data which defines places which can form paths along which avatars can move in the virtual space. For example, a road is a place which is defined as a path.

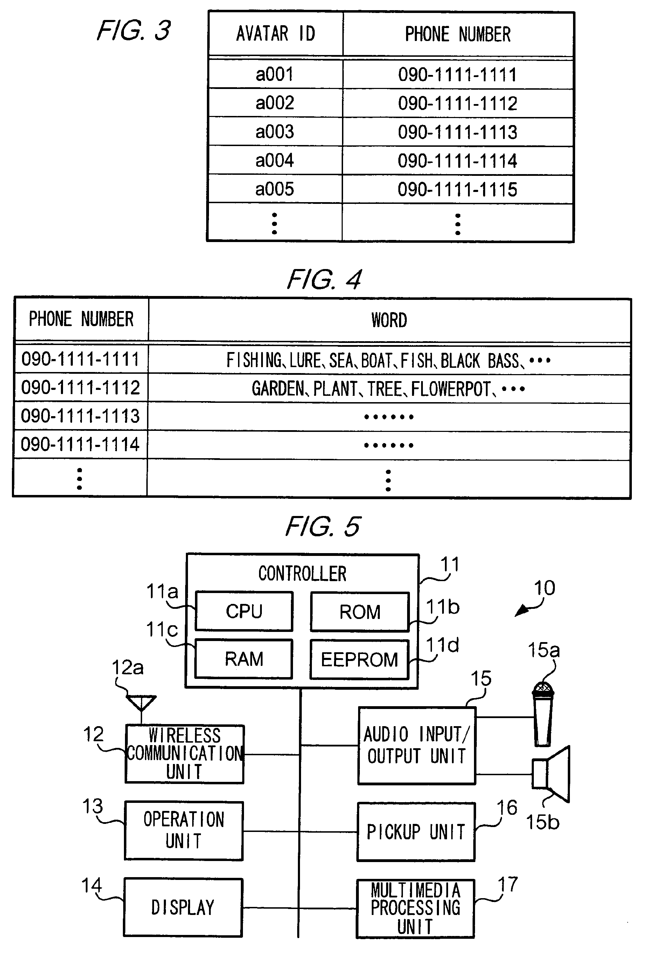

Position data sets for avatars respectively indicate positions of the avatars, and are sent from the plural mobile communication terminals 10. The avatar ID conversion table describes avatar IDs respectively assigned to the avatars, and phone numbers also respectively assigned to the avatars. In the avatar ID conversion table, the avatar IDs and the phone numbers are respectively associated with each other. The communication history is a history of communications which have been made between the mobile communication terminals 10. The communication history includes phone numbers of mobile communication terminals as a communication source and a communication destination for each of communications in the past, and also a time when a communication was made between mobile communication terminals, for each of the communications in the past. The word database includes words pre-registered by users, for example, favorite words of the users of the mobile communication terminals 10. The words are stored associated with phone numbers of the mobile communication terminals 10, as shown in FIG. 4

Next, the mobile communication terminals 10 will be described below.

Each of the mobile communication terminals 10 is a so-called mobile phone which is a communication terminal capable of communicating with another one of the communication terminals 10 via the mobile communication network 20. Each of the mobile communication terminals 10 has a TV phone function and is configured so as to transmit/receive images to/from another mobile communication terminal 10 while making a voice conversation, and so as to display the received images. Further, each of the mobile communication terminals 10 has a function of displaying a virtual space provided by the control device 30, and avatars representing users in the virtual space. Each of the mobile communication terminals 10 has a function of allowing a user to move an avatar representing the user within the virtual space to make a communication with another avatar representing another user.

FIG. 5 is a block diagram showing a configuration of each of the mobile communication terminals 10.

As shown in FIG. 5, the mobile communication terminals 10 each has a controller 11, a wireless communication unit 12, an operation unit 13, a display 14, an audio input/output unit 15, a camera unit 16, and a multimedia processing unit 17. The controller 11 includes a CPU 11a, a ROM 11b, a RAM 11c, and an EEPROM (Electronically Erasable and Programmable ROM) 11d. The CPU 11a controls operations of respective components of each mobile communication terminal 10 by executing programs stored in the ROM 11 and the EEPROM 11d, using the RAM 11c as a work area. The wireless communication unit 12 has an antenna 12a and wirelessly transmits/receives data to/from the mobile communication network 20. The operation unit 13 has operators such as buttons to supply operation signals associated with user's operations to the controller 11. The display 14 is constituted of a display device including a liquid crystal panel and a liquid crystal drive circuit. In accordance with instructions received from the controller 11, various information is displayed on the display 14. The audio input/output unit 15 includes a microphone 15a and a loudspeaker 15b to input and output audio signals. The shoot unit 16 functions to shoot an image, such as a so-called camera. The shoot unit 16 includes a CMOS (Complementary Metal Oxide Semiconductor) image sensor and a signal processing circuit, and generates image data expressing a camera image of an object.

The multimedia processing unit 17 executes encoding and decoding processings, and multiplexing and demultiplexing processings on voices and images. The multimedia processing unit 17 includes an LSI (Large Scale Integration) circuit for processing data transmitted/received by the wireless communication unit 12. The multimedia processing unit 17 generates video data in accordance with image data generated by the shoot unit 16. The generated video data will be hereinafter referred to as a "camera image data set". An AMR (Adaptive Multi-Rate) scheme is adopted in encoding/decoding of audio signals, and an MPEG (Moving Picture Experts Group)-4 scheme is adopted in encoding/decoding of image data.

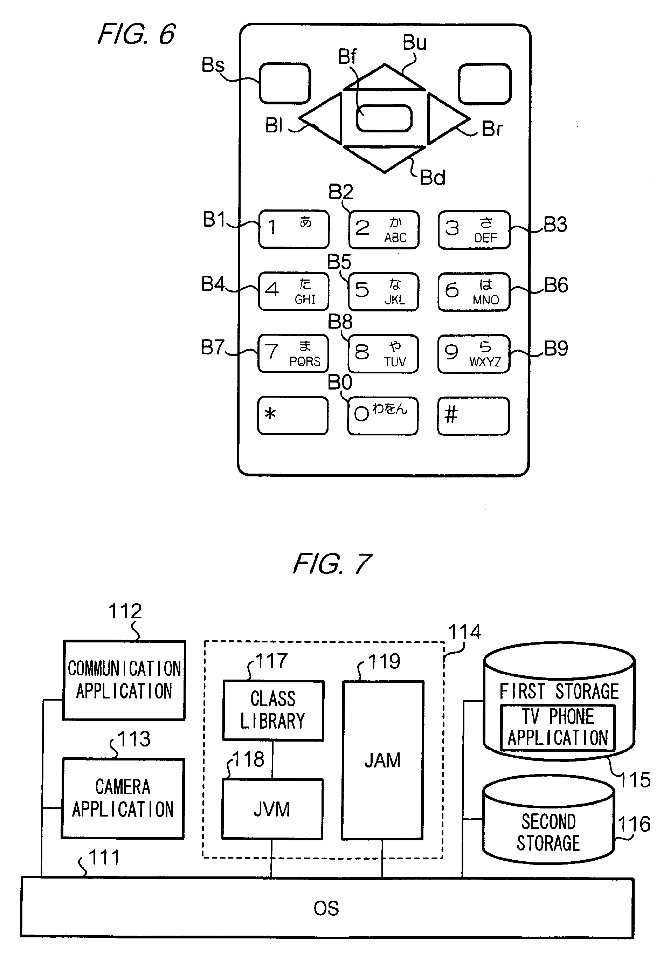

The operators included in the operation unit 13 will now be described with reference to FIG. 6. The operation unit 13 has a function button Bs, move buttons Bu, Bd, B1, and Br, an enter button Bf, and dial buttons B 1 to B0. The function button Bs is assigned with predetermined functions associated with screens displayed on the display 14. The functions assigned to the function button Bs are to select communication destinations which will be described in detail later. The move buttons Bu, Bd, B1, and Br are assigned functions to move an object as a target to move (such as an avatar or a pointer) forward, backward, leftward, and rightward (or upward, downward, leftward, and rightward), respectively. The enter button Bf is assigned a function to select an object displayed on the display 14 and then to fix content of a processing to execute. The dial buttons B 1 to B0 are assigned functions to input text and numbers.

Next, content of data stored in each of the mobile communication terminals 10 will be described below. The ROM 11b stores several programs, which will be hereinafter referred to as "preinstalled programs". Specifically, the preinstalled programs include a multitask operating system (hereinafter "multitask OS"), a Java ^{™} platform, and native applications. These programs will now be described schematically. The multitask OS is an operating system which supports various functions required for performing pseudo parallel execution of plural tasks by a TSS (Time-Sharing System). The Java platform is a group of programs which are described in accordance with a CDC (Connected Device Configuration). The CDC is a configuration for establishing a Java execution environment 114, described later, in a mobile device which employs a multitask OS. The native applications are programs for providing the mobile communication terminals 10 with basic services such as conversations, communications, photographing by a camera, etc.

The EEPROM 11d has a Java application storage area where Java applications are stored. Each of the Java applications includes a JAR (Java Archive) file, information used for installing or starting up the JAR file, and an ADF (Application Descriptor File) describing various properties. The JAR file compiles a program entity which describes processing procedures in the Java execution environment 114, and image files and audio files which are used in accordance with execution of the program entity. The Java applications are created by content providers and/or carriers and are stored into server devices connected to the internet or the mobile communication network 20. The Java applications are downloaded from control devices of the applications in response to requests from the mobile communication terminals 10.

FIG. 7 shows a logical configuration of respective components which are established by the controller 11 in each of the mobile communication terminals 10, as various programs stored in the ROM 11b and the EEPROM 11d are executed. As shown in FIG. 7, each of the mobile communication terminals 19 executes various programs thereby to establish a communication application 112, a camera application 113, and a Java execution environment 114 on the OS 111. Further, the EEPROM 11d maintains a first storage 115 and a second storage 116. The communication application 112 and the camera application 113, which are established by the native applications stored in the ROM 11b, respectively perform a function to perform a communication with mobile communication network 20 and a function to shoot an image by the shoot unit 16.

The Java execution environment 114 is established by a Java platform stored in the ROM 11b. The Java execution environment 114 includes a class library 117, a JVM (Java Virtual Machine) 118, and a JAM (Java Application Manager) 119. The class library 117 compiles a group of program modules (or classes) respectively having particular functions into one file. The JVM 118 is a Java execution environment optimized for the CDC mentioned above, and functions to interpret and execute bite codes provided in the form of Java applications. The JAM 119 functions to manage downloading, installation, startup, and termination of Java applications. A first storage 115 is an area for storing Java applications (Jar files and ADF) downloaded under management of the JAM 119. A second storage 116 is an area where data generated by execution of Java applications remains stored after termination of the Java applications. The second storage 116 is internally divided into storage areas which are assigned respectively to installed Java applications. Data in one of the storage areas which is assigned to a Java application is rewritable only while the Java application is being executed. The data can therefore not be rewritten by any other Java applications than the Java application to which the storage area including the data is assigned.

Each Java application includes an application which displays a virtual space so as to move relative to motion of an avatar, and enables a conversation and communication with another mobile communication terminal 10. This application will be hereinafter referred to as a "TV phone application". The TV phone application is prestored in each of the mobile communication terminals 10. The EEPROM 11d stores an "avatar image data set" which expresses an avatar required for executing the TV phone application.

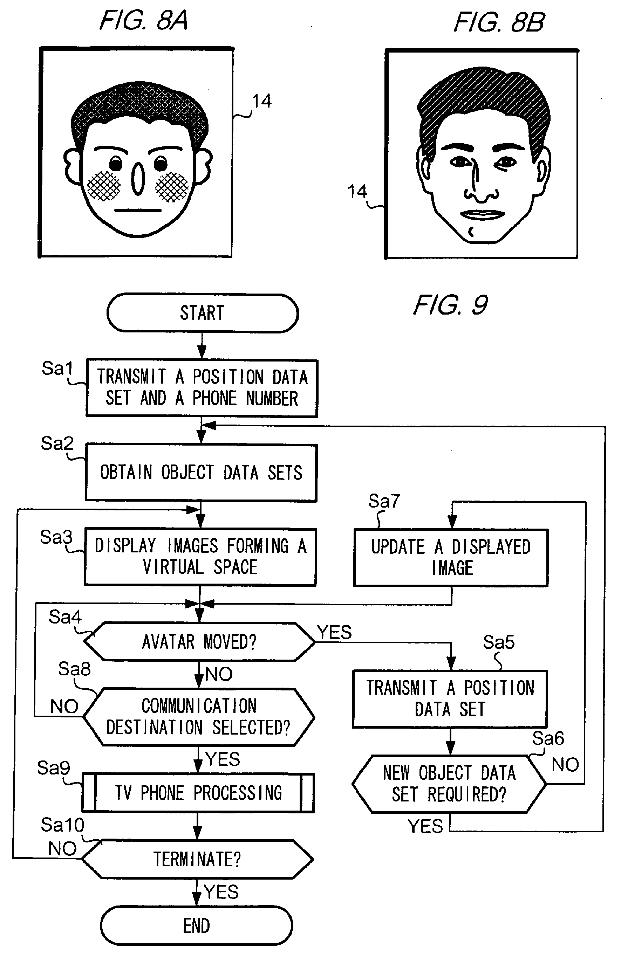

To make a TV phone communication with use of an avatar image data set, the controller 11 reads and sends the avatar image data set from the EEPROM 11d to the mobile communication network 20 together with a voice message input to the audio input/output unit 15. The mobile communication network 20 transmits the avatar image data set and the voice message to a mobile communication terminal 10 as a communication destination. In the mobile communication terminal 10 as the communication destination, the controller 11 performs control so that an avatar image is displayed on the display 14 in accordance with the avatar image data set received by the wireless communication unit 12 and the received voice message is output through the audio input/output unit 15. FIG. 8A shows an example of an avatar image expressed by an avatar image data set where the avatar image is displayed on the display 14 of a communication terminal 10 as a communication destination.

On the other hand, to make a TV phone communication with use of a camera image data set, the controller 11 transmits a camera image data set which is generated by the shoot unit 16 to the mobile communication network 20 together with a voice message input to the audio input/output unit 15. The mobile communication network 20 transmits the camera image data set and the voice message to the mobile communication terminal 10 as a communication destination. In the mobile communication terminal 10 as the communication destination, the controller 11 performs control so that a camera image is displayed on the display 14 in accordance with the camera image data set received by the wireless communication unit 12, and the received voice message is output through the audio input/output unit 15. FIG. 8B shows an example of a user's face shot by the shoot unit 16 where the camera image is displayed on the display 14 of a communication terminal 10 as a communication destination.

### 2. Operations

Next, a description will be made of operations of the mobile communication terminals 10 and the control device 30 in the mobile communication system configured as described above. Described first will be processings which are executed by each mobile communication terminal 10 when starting up the TV phone application as described above. Described second will be processings which are executed by the mobile communication terminals 10A and 10B and the control device 30 when a voice communication is made between mobile communication terminals 10A and 10B.

FIG. 9 is a flowchart showing processings which the mobile communication terminal 10A executes when starting up the TV phone application. The TV phone application is started up, triggered by a predetermined operation of a user. The controller 11 of the mobile communication terminal 10A then transmits a position data set indicating a predetermined position in a virtual space and a data set indicating a phone number of the mobile communication terminal 10A (step Sa1). Thus, the position data set indicates, for example, a predetermined position. Otherwise, the position data set may indicate a position where an avatar was located when the TV phone application was terminated last, or any other position.

The control device 30 receives the position data set. The controller 31 in the control device 30 obtains the position data set. The controller 31 further specifies object data sets, depending on the obtained position data set. More specifically, the controller 31 specifies object data sets which define those objects that are located within a predetermined range from the position indicated by the obtained position data. After specifying object data sets in this manner, the controller 31 transmits the specified object data sets and position data sets associated with the specified object data sets to the mobile communication terminal 10A. If an avatar of another user exists at this time within the aforementioned predetermined range, the controller 31 also transmits an avatar image data set expressing the avatar, an avatar ID assigned to the avatar, and a position data set indicating a position of the avatar, all of which are included in a single avatar-related information item. The controller 11 of the mobile communication terminal 10A obtains the object data sets and the avatars-elated information item from the control device 30 (step Sa2). In accordance with the object data sets and the avatar-related information item, the controller 11 causes the display 14 to display images expressing a virtual space (step Sa3).

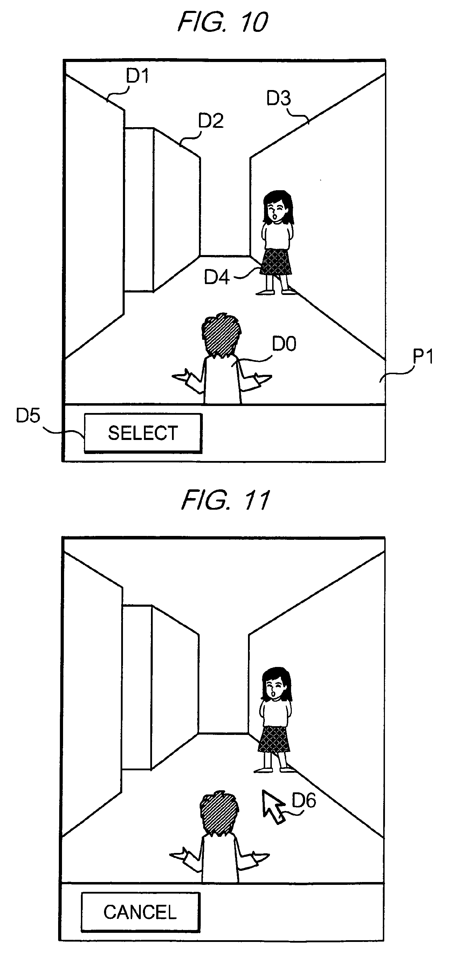

FIG. 10 shows an example of a screen image displayed on the display 14 at this time. In this figure, an image D0 is an avatar image representing the user of the mobile communication terminal 10A and moves relative to the virtual space in accordance with operations from this user. Images D1, D2, and D3 represent buildings. An area P1 intervening between the buildings represents roads. An image D4 is an avatar image representing a user of a mobile communication terminal 10B different from the mobile communication terminal 10A. The image D4 moves relative to the virtual space in accordance with operations from the user of the mobile communication terminal 10B. An image D5 expresses a function assigned to the function button Bs.

As the user of the mobile communication terminal 10A presses the move buttons Bu, Bd, B1, and Br in the state as described above, the controller 11 changes display content of the display 14 so as to change the position of the avatar representing the user of the terminal 10A relative to the virtual space. For example, if the user presses the move button Bu in the state shown in FIG. 9, the controller 11 updates the display content of the display 14 by changing display positions of the images D1, D2, D3, and D4 based on object data sets. In this manner, the avatar expressed by the image D0 looks as if it has moved forward. If the user presses the function button Bs in this state, the controller 11 causes the display 14 to show a pointer, and allows the user to select an avatar associated with a communication partner. If the user presses the function button Bs again with the pointer displayed, the controller 11 hides the pointer and thereby releases the avatar to be freely movable again.

FIG. 11 shows an example of a screen image where the display 14 shows the pointer. In FIG. 11, the pointer is expressed in the form of an arrow depicted as an image D6. As described above, if the user presses down the move buttons Bu, Bd, B1, and Br with the pointer shown, the controller 11 changes the display content of the display 14 so as to move the position of the pointer. Thus, while the pointer is hidden, the move buttons Bu, Bd, B1, and Br function as operators for relatively moving the avatar representing the user of the mobile communication terminal 10A. While the pointer is shown, the move buttons Bu, Bd, B1, and Br function as operators for moving the pointer. Further, if the enter button Bf is pressed when the pointer overlaps an avatar image representing a user of a mobile communication terminal as a desired communication destination, the controller 11 then transmits, to the control device 30, a request for a communication on the TV phone with the desired communication destination associated with the avatar of the overlapped avatar image.

The operations described above will now be described with reference to the flowchart shown in FIG. 9. After images are displayed in the step Sa3, the controller 11 determines whether the user of the mobile communication terminal 10A has given an instruction to move the avatar of the user (step Sa4). More specifically, the controller 11 repeatedly determines whether an operation signal has been supplied for each of the move buttons Bu, Bd, B1, and Br. If an instruction to move the avatar has been given by the user (step Sa4: YES), the controller 11 transmits a position data set indicating a new position of the avatar to the control device 30 (step Sa5). Subsequently, the controller 11 determines whether any new object data set other than object data sets which have already been obtained is required (step Sa6). If no new object data set is required (step Sa6: NO), the controller 11 updates the display positions of the images which are presently displayed in accordance with the object data sets, so that the avatar on the screen looks as if it has moved (step Sa7). The controller 11 thereafter returns to the processing of the step Sa4. Otherwise, if any new object data set is required (step Sa6: YES), the controller 11 obtains the object data set from the control device 30 on the basis of the transmitted position data set (step Sa2).

The controller 11 repeats the processings described above continuously while the user moves the avatar.

If no instruction to move the avatar has been given by the user (step Sa4: NO), the controller 11 determines whether a communication destination has been selected (step Sa8). More specifically, the controller 11 determines whether an operation signal assigned to the enter button Bf has been supplied when the pointer overlapped the avatar image. If the controller 11 determines that no communication destination has been selected by the user (step Sa8: NO), the controller 11 returns again to the processing of the step Sa4. Otherwise, if the controller 11 determines that a communication destination has been selected (step Sa8: YES), the controller 11 executes a processing for making a TV phone communication (step Sa9). This processing (hereinafter "TV phone processing") will be described in detail later. The controller 11 then determines whether the user has given an instruction to terminate the TV phone application (step Sa10). If the user has given an instruction to terminate the TV phone application (step Sa10: YES), the controller 11 terminates the TV phone application. Otherwise, if no instruction to terminate the TV phone application has been given (step Sa10: NO), the controller 11 repeats again the processing from the step Sa3.

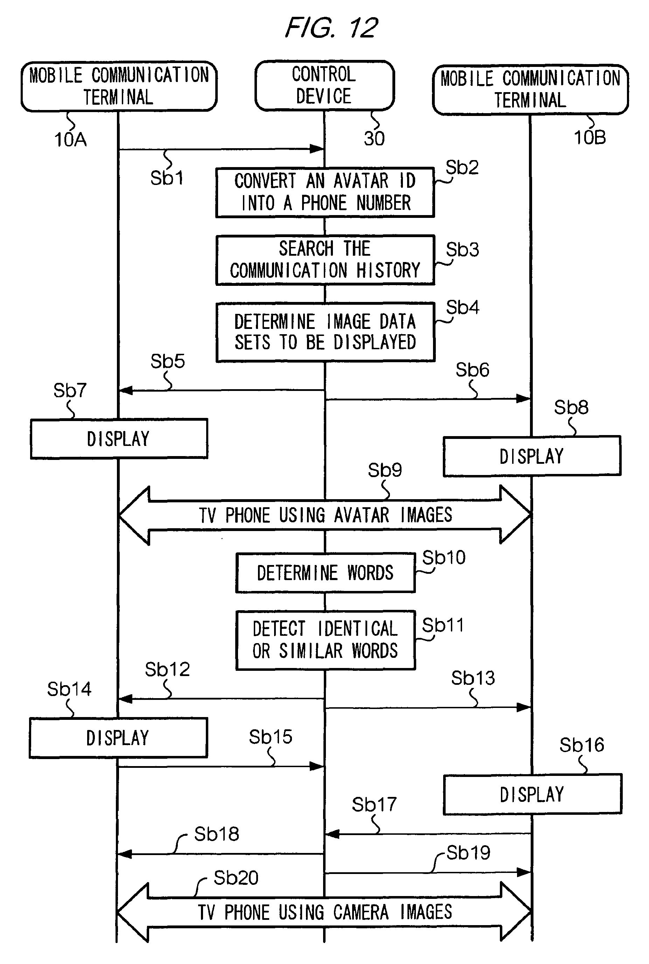

Subsequently, the TV phone processing in the step Sa2 will now be described. This processing will be described together with processings which are carried out at the same time by the control device 30 and the mobile communication terminal 10B. FIG. 12 is a sequence chart showing a series of processings which are executed at this time by the mobile communication terminals 10A and 10B and the control device 30. In the following description, operations of the mobile communication terminals 10A and 10B and the control device 30 will be described with reference to the chart shown in FIG. 12.

At first, the controller 11 of the mobile communication terminal 10A transmits a request for making a TV phone communication to the control device 30 (step Sb1). This request includes a phone number of the mobile communication terminal 10A and an avatar ID of an avatar specified as a communication destination by the pointer D6. The controller 31 of the control device 30 obtains this request through the communication unit 32, and then converts the avatar ID included in the request into a phone number by using the avatar ID conversion table stored in the storage 33 (step Sb2). Next, the controller 31 searches the communication history in the storage 33 with reference to a key which is a pair of phone numbers of the mobile communication terminal 10A and the communication destination, to check whether the communication history includes the same pair of phone numbers as the foregoing pair of phone numbers referred to as a key (step Sb3).

Subsequently, the controller 31 determines image data sets to be displayed on the mobile communication terminals 10A and 10B during the TV phone communication, based on a search result obtained in the step Sb3 (step Sb4). More specifically, if the pair of phone numbers of the mobile communication terminal 10A and the communication destination is included in the communication history, the controller 31 determines that a camera image data set representing each of the mobile communication terminals 10A and 10B should be displayed on the other of the mobile communication terminals 10A and 10B during the TV phone communication. Otherwise, if the pair of phone numbers of the mobile communication terminal 10A and the communication destination is not included in the communication history, the controller 31 determines that an avatar image data set representing each of the mobile communication terminals 10A and 10B should be displayed on the other of the mobile communication terminals 10A and 10B during the TV phone communication.

Next, the controller 31 transmits, to the mobile communication terminal 10A, a data set indicating an image data set to be transmitted, on the basis of a determination made in the step Sb4 (step Sb5). Specifically, if the pair of phone numbers of the mobile communication terminal 10A and the communication destination is not included in the communication history, the controller 31 instructs the mobile communication terminal 10A to transmit an avatar image data set. In parallel, the controller 31 instructs nodes in the mobile communication network 20, such as service control stations, to call the mobile communication terminal 10B (step Sb5). This call notifies the mobile communication terminal 10B that there is a call for a TV phone communication using avatar images. The call includes an avatar image data set representing the user of the mobile communication terminal 10A.

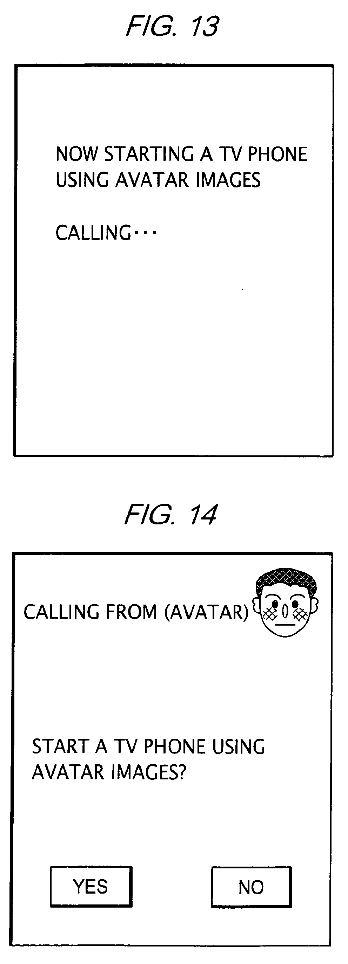

The mobile communication terminal 10A receives an instruction as described above from the control device 30, and the controller 11 of the terminal 10A causes the display 14 to display a screen as shown in FIG. 13 (step Sb7). The screen describes that the mobile communication terminal 10A is calling up a communication partner for a TV phone communication using avatar images. On the other hand, the controller 11 of the called mobile communication terminal 10B causes the display 14 to display a screen as shown in FIG. 14 (step Sb8). This screen shows an avatar image of the calling user (of the mobile communication terminal 10A as a communication source) together with a text message asking whether a TV phone communication using avatar images is acceptable. If the called user (of the mobile communication terminal 10B as a communication destination) then selects "YES", the controller 11 of the mobile communication terminal 10B replies with "YES" to the mobile communication network 20. A communication channel is then established between the mobile communication terminals 10A and 10B (step Sb9).

After the communication channel is established, the controller 11 of each of the mobile communication terminals 10A and 10B displays an image as shown in FIG. 8A. In this state, a TV phone communication is made between the two users. Specifically, the controller 11 of each of the mobile communication terminals 10A and 10B reads own avatar image data set from the EEPROM 11d, and transmits the avatar image data set together with a voice message input through the audio input/output unit 15 to the mobile communication network 20. In the other of the mobile communication terminals 10A and 10B, the controller 11 receives the avatar image data set and the voice message through the wireless communication unit 12, and displays an avatar image in accordance with the received avatar image data set. Further, the controller 11 outputs the received voice message through the audio input/output unit 15.

At the same time when the communication channel is established, the controller 31 of the control device 30 starts a voice recognition processing on voice messages transmitted/received between the mobile communication terminals 10A and 10B. The controller 31 compares words recognized by the voice recognition processing with words included in the word database. The controller 31 determines whether any of the words recognized by the voice recognition processing is identical or similar to any of the words included in the word database (step Sb10). The term "similar" is intended to limit a range of similarity which is predefined in consideration of accuracy of the voice recognition processing and inflections of words. A "similar" word within the range of similarity from a word included in the word database may be considered to be a synonym of the word, for example.

At this time, words included in voice messages transmitted from the mobile communication terminal 10A are compared with words which are stored in the word database and are associated with the phone number of the mobile communication terminal 10B. Similarly, words included in voice messages transmitted from the mobile communication terminal 10B are compared with words which are stored in the word database and are associated with the phone number of the mobile communication terminal 10A. That is, whether words spoken by each of the users as communication partners suit preferences of the other of the users is determined.

If the user of the mobile communication terminal 10B selects "NO" on the screen displayed in the step Sb8, the controller 11 of the mobile communication terminal 10B replies to the mobile communication network 20 by refusing the call. In this case, no communication channel is established between the mobile communication terminals 10A and 10B.

If not less than a predetermined number of words among the words recognized by the voice recognition processing for each of the communication partners are detected as being identical or similar to words included in the word database (step Sb11), the controller 31 transmits, to both the mobile communication terminals 10A and 10B, a notification that the TV phone communication using substitute images is switched to a TV phone communication using camera images (steps Sb12 and Sb13). The if-clause condition described above as "If a predetermined number of words or more among ... for each of the communication partners" defines a case that following individual two conditions are satisfied. One of the two conditions is that no fewer words than a constant number among the pre-registered words associated with the phone number of the mobile communication terminal 10B are detected as being identical or similar to words included in voice messages transmitted from the mobile communication terminal 10A. The other of the two conditions is that no fewer words than a constant number among the pre-registered words associated with the phone number of the mobile communication terminal 10A are detected as being identical or similar to words included in voice messages transmitted from the mobile communication terminal 10B.

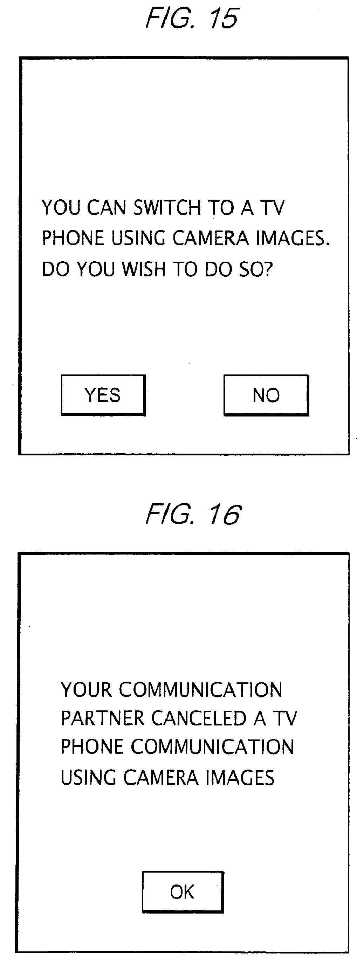

The mobile communication terminal 10A receives the notification as described above. The controller 11 of the mobile communication terminal 10A then causes the display 14 to display a screen as shown in FIG. 15 (step Sb14). On this screen, a message is displayed to ask whether a camera image should be used for the TV phone communication. At this time, if the user selects "YES", the controller 11 of the mobile communication terminal 10A replies positively with YES to the mobile communication network 20 (step Sb15).

Similarly, the controller 11 of the mobile communication terminal 10B causes the display 14 to display the same screen as described above (step Sb16). If the user of the mobile communication terminal 10B then selects "YES", the controller 11 replies positively with YES to the mobile communication network 20 (step Sb17). The controller 31 receives such responses of "YES" from both the mobile communication terminals 10A and 10B, and then instructs both terminals 10A and 10B to switch the TV phone communication using avatar images to a TV phone communication using camera images (steps Sb18 and Sb19). In accordance with the instruction, the mobile communication terminals 10A and 10B each perform a TV phone communication using camera images as shown in FIG. 8B through the processings as described previously (step Sb20). That is, in each of the mobile communication terminals 10A and 10B, the controller 11 transmits a camera image data set generated by a pickup unit 16 together with a voice message input to the audio input/output unit 15, to the mobile communication network 20. The mobile communication network 20 transmits the camera image data set transmitted from each of the mobile communication terminals 10A and 10B to the other of the mobile communication terminals 10A and 10B. In each of the mobile communication terminals 10 as communication partners, the controller 11 causes the display 14 to display a camera image in accordance with the camera image data set received by the wireless communication unit 12, and causes the audio input/output unit 15 to output the voice messages received.

Otherwise, if a user selects "NO" on the screen displayed in the step Sb14 or Sb16, the controller 11 of the mobile communication terminal 10 of the user replies negatively to the mobile communication network 20. The mobile communication network 20 notifies the negative response to the mobile communication terminal of the other user as a communication partner. In accordance with the notification, the controller 11 of the mobile communication terminal 10 of the other user causes the display 14 to display a screen as shown in FIG. 16. At this time, the displayed image is not changed from the avatar image to the camera image.

In the step Sb3, if the pair of phone numbers of the mobile communication terminal 10A and the communication partner is included in the communication history, the controller 31 instructs the mobile communication terminal 10A to transmit a camera image data set. In parallel, the controller 31 instructs nodes of the mobile communication network 20, such as service control stations, to call the mobile communication terminal 10B. This call notifies the mobile communication terminal 10B that there is a call for a TV phone communication using camera images. In the mobile communication terminal 10A instructed as described above, the controller 11 displays a screen describing that a communication partner is now being called for a TV phone communication using camera images (step Sb7).

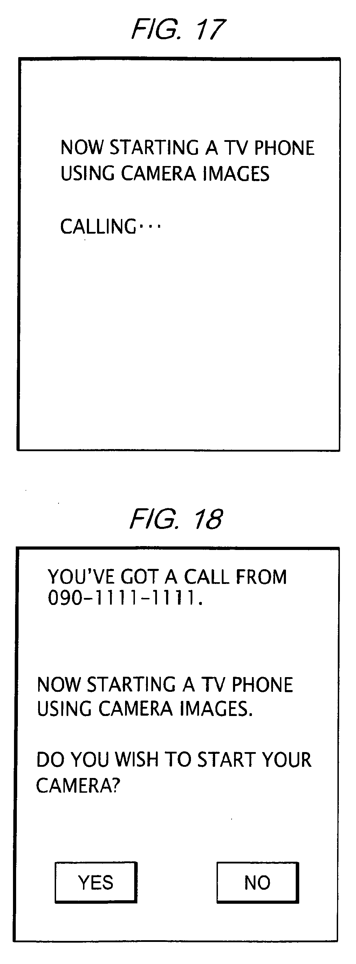

In the called mobile communication terminal 10B, the controller causes the display 14 to display a screen (shown in FIG. 18) showing the phone number of the mobile communication terminal 10A as a caller and a message asking whether a TV phone communication using camera images is acceptable (step Sb8). If the user of the mobile communication terminal 10B selects "OK", the controller 11 of the terminal 10B replies positively to the mobile communication network 20. Accordingly, a communication channel is established between the mobile communication terminals 10A and 10B.

Thereafter, a TV phone communication using camera images is available between the mobile communication terminals 10A and 10B.

In the present embodiment, the mobile communication terminals 10A and 10B and the control device 30 operate as described above. In accordance with the operations as described above, a user of a mobile communication terminal 10 can freely move as an avatar in a virtual space, and can make a TV phone communication with another user who operates another avatar by another mobile communication terminal 10. That is, the present embodiment enables TV phone communications without knowledge of a phone number of a communication partner. Further, each mobile communication terminal 10 is supplied only with an avatar ID associated with another mobile communication terminal 10 as a communication partner but is not supplied with the phone number of the communication partner. Therefore, leakage of phone numbers can be prevented. In addition, according to the present embodiment, a call is made by a far different method from known methods adopted in TV phones according to related arts. The far different method is that a user looks for a communication partner by virtually walking around as an avatar within a virtual space. Accordingly, TV phones are additionally given entertainment value, which is expected to promote use of TV phones.

In the above embodiment, an avatar image representing a communication partner is displayed first on each of the mobile communication terminals. If the communication partner frequently says favorite words of a user as another communication partner whom the communication partner is talking to in the process of making conversations continuously, displayed avatar images are switched to camera images. In this manner, a TV phone communication is made displaying avatar images first. From a later time point when communication partners are determined to be able to get along well with each other to a certain extent, the TV phone communication may be made displaying camera images. Thus, the communication style is gradually changed. As a result, a mental barrier which each user may have against an unidentified communication partner is expected to be relaxed gradually. Further, whether avatar images should be switched to camera images is asked to each user. Accordingly, each user of the mobile communication terminals 10 can prevent an own camera image from being shown to an undesirable communication partner. Thus, privacies of users are protected appropriately.

### 3. Modifications

The embodiment described above may be modified as follows. Modifications described below may be combined with each other in use.

### (1) Modification 1

In the above embodiment, words which suit interests and preferences of users are pre-registered, i.e., favorite words are pre-registered for each user. A TV phone communication is started using substitute images first. Thereafter, if any of words pre-registered by any of users is spoken by a communication partner, the substitute images can be switched to camera images. However, pre-registered words and images used when starting a TV phone communication are not limited to those described in the above embodiment.

For example, plural words which are considered inappropriate or imprudent in view of common sense may be registered in the word database. Such plural words are discriminatory terms or those words that may make communication partners feel uncomfortable. In this case, users start a TV phone communication using camera images first. If any of the inappropriate words pre-registered by one of the users is spoken by the other of the users as a communication partner, the camera images may then be switched to substitute images. In this case, for example, words which are prohibited usually in the field of the broadcast industry may be registered in the word database.

In the above embodiment, phone numbers of mobile communication terminals 10 and pre-registered words are stored, with the phone numbers associated with the pre-registered words. However, pre-registered words may be common to all users. That is, many of those words which make users feel uncomfortable, and discriminatory terms, may be common to every user. Therefore, stored phone numbers of mobile communication terminals 10 and stored pre-registered words need not be associated with each other.

Also in the above embodiment, phone numbers of mobile communication terminals 10 and pre-registered words are stored, associated with each other, in a manner that the pre-registered words accurately correspond to interests and preferences of each of individual users. However, the word database may be common to all users. That is, all pre-registered words may be common to every user.

### (2) Modification 2

In the above embodiment, images which are displayed first when starting a TV phone communication are determined depending on a communication history. That is, a pair of phone numbers of mobile communication terminals 10A as a communication source and a communication destination is included in the communication history stored in the control device 30, and camera images are determined first as images which are displayed at the start of a TV phone communication. However, the method of determining images to be displayed first when starting a TV phone communication is not limited to the method as described above. For example, images to be displayed first when starting a TV phone communication may be predetermined.

### (3) Modification 3

In the above embodiment, an image displayed during a TV phone communication on each of mobile communication terminals 10 is switched by the other of the mobile communication terminals 10 as a transmission source which transmits an image data set to be displayed. However, images may be switched by any device other than the mobile communication terminals 10 as such transmission sources.

For example, the control device 30 may switch displayed images. In this case, each mobile communication terminal 10 as a transmission source transmits both of an avatar image data set and a camera image data set. The control device 30 selects and transmits one of the avatar and camera image data sets to each mobile communication terminal 10 as a transmission destination.

Alternatively, each mobile communication terminal 10 as a transmission destination may switch a displayed image. In this case, the control device 30 transmits both of an avatar image data set and a camera image data set to each mobile communication terminal 10 as a transmission destination. Further, the control device 30 instructs each mobile communication terminal 10 as a transmission destination which of the avatar and camera image data sets to display. Each mobile communication terminal 10 as a transmission destination then displays an image in accordance with one of the avatar and camera image data set as instructed by the control device 30.

### (4) Modification 4

Any device other than mobile communication terminals 10 may store an avatar image data set.

For example, the control device 30 may prestore an avatar image data set in the storage 33. In this case, the control device 30 instructs a mobile communication terminal 10 as a transmission source to constantly transmit a camera image data set and a message. The control device 30 selects and transmits either the camera image data set received from the mobile communication terminal 10 as a transmission source or an avatar image data set prestored in the storage 33, as an image data set to be transmitted to another mobile communication terminal 10 as a transmission destination. In this example, the control device 30 is configured so as to relay data related to a TV phone communication (voice data, image data, etc.), and so as to include a structure equivalent to the multimedia processing unit included in each of the mobile communication terminals 10. In a case of transmitting an avatar image data set to the other mobile communication terminal 10 as a transmission destination, the controller 31 of the control device 30 obtains a voice message and a camera image data set which have been multiplexed on each other by the communication unit 32. The controller 31 further demultiplexes the voice message and the camera image data from each other. The controller 31 substitutes the demultiplexed camera image data set with an avatar image data set read from the storage 33, and further performs a multiplexing processing. The controller 31 supplies the communication unit 32 with a multiplexed data set into which the voice message and the avatar image data set have been multiplexed by the multiplexing processing. The controller 31 further transmits the multiplexed data set to the other mobile communication terminal 10 as a transmission destination.

As an alternative example in which the control device 30 stores plural avatar image data sets, each of the mobile communication terminals 10 may transmit a specification data set indicating an avatar ID which identifies an avatar image data set. In this example, a data transmission amount by each of the mobile communication terminals 10 as a transmission source can be reduced. In this example, the control device 30 functions to relay data related to a TV phone communication, and to store the plural avatar image data sets respectively associated with avatar IDs. If an avatar image is displayed on a mobile communication terminal 10 as a transmission destination, a mobile communication terminal 10 as a transmission source transmits a specification data set including an avatar ID together with a voice message. The controller 31 of the control device 30 receives the specification data set from the mobile communication terminal 10 as a transmission source, and then performs a multiplexing processing on the voice message and an avatar image data set associated with the avatar ID included in the specification data set. Thereafter, the controller 31 supplies the communication unit 32 with a multiplexed data set obtained by the multiplexing processing, and transmits the multiplexed data set to the mobile communication terminal 10 as a transmission destination. If a camera image is displayed on the mobile communication terminal 10 as a transmission destination, the control device 30 instructs the mobile communication terminal 10 as a transmission source to transmit a camera image data set and a voice message.

As a still alternative example, the control device 30 may be configured so as to store plural avatar image data sets respectively associated with phone numbers of the mobile communication terminals 10. In a case of displaying an avatar image on a mobile communication terminal 10 as a transmission destination, a mobile communication terminal 10 as a transmission source transmits its own phone number and a voice message. The controller 31 of the control device 30 performs a multiplexing processing on the voice message and an avatar image data set associated with the phone number of the mobile communication terminal 10 as a transmission source. Thereafter, the controller 31 supplies the communication unit 32 with a multiplexed data set obtained by the multiplexing processing, and transmits the multiplexed data set to the mobile communication terminal 10 as a transmission destination. In a case of displaying a camera image on the mobile communication terminal 10 as a communication destination, the control device 30 instructs the mobile communication terminal 10 as a transmission source to transmit a camera image data set and a message. In this example, a data transmission amount by each mobile communication terminal 10 as a transmission source can also be reduced.

As a still alternative example, a mobile communication terminal 10 as a transmission destination may be configured so as to store plural avatar image data sets which can be displayed as avatar images each representing a user as a transmission source. The avatar image data sets are stored, respectively associated with avatar IDs. In a case of displaying an avatar image on a mobile communication terminal 10 as a transmission destination, a mobile communication terminal 10 as a transmission source transmits a specification data set including an avatar ID together with a voice message. The control device 30 further transmits the specification data set and the voice message to the mobile communication terminal 10 as a transmission destination. In the mobile communication terminal 10 as a transmission destination, the controller 11 reads an avatar image data set associated with the avatar ID included in the specification data set, from among the stored plural avatar image data sets. The controller 11 then displays the read avatar image. In a case of displaying a camera image on a mobile communication terminal 10 as a transmission destination, the control device 30 instructs a mobile communication terminal 10 as a transmission source to transmit a camera image data set and a message.

### (5) Modification 5

The device which compares words included in voice messages with the word database is not limited to the control device 30. For example, each of the mobile communication terminals 10 may carry out such a comparison.

In this case, the EEPROM 11d of each of mobile communication terminals 10 prestores plural words. The controller 11 of each of the mobile communication terminals 10 determines whether any of the words prestored in the EEPROM 11d is identical or similar to any of words included in voice messages received from the other of the mobile communication terminals 10 as a communication partner. The controller 11 of each of the mobile communication terminals 10 selects, as an image to transmit through the wireless communication unit 12, one of a camera image and an avatar image received from the other of the mobile communication terminals 10 as a communication partner. In this example, avatar images may be stored in the mobile communication terminals 10 or the control device 30.

In a case where the mobile communication terminals 10 each store an avatar image, each of the mobile communication terminals 10 includes an obtaining means, a first storage means, a transmission/reception means, a display means, a second storage means, a determination means, and a selection means. The obtaining means obtains a camera image shot by a pickup means. The first storage means stores a substitute image which is substitutable for the camera image. The transmission/reception means transmits/receives images and messages to/from a mobile communication terminal as a transmission destination. The display means displays images received by the transmission/reception means. The second storage means stores plural words. The determination means determines whether any of the plural words stored in the second storage means is identical or similar to any of words included in the messages received by the transmission/reception means. Depending on a determination result by the determination means, the selection means selects either the camera image obtained by the obtaining means or the substitute image stored in the first storage means, as an image to transmit through the transmission/reception means.

In another case where the control device 30 stores avatar images, the controller 11 of each of the mobile communication terminals 10 transmits a specification data set which specifies an avatar image, through the wireless communication unit 12. The control device 30 transmits an avatar image data set specified by the specification data set to each of the mobile communication terminals 10 as a transmission destination. In this case, each of the mobile communication terminals 10 includes an obtaining means, a transmission/reception means, a display means, a storage means, a determination means, and a selection means. The obtaining means obtains a camera image shot by a pickup means. The transmission/reception means transmits/receives images and messages to/from a mobile communication terminal as a transmission destination. The display means displays images received by the transmission/reception means. The storage means stores plural words. The determination means determines whether any of the plural words stored in the storage means is identical or similar to any of words included in the messages received by the transmission/reception means. Depending on a determination result of the determination means, the selection means selects either the camera image obtained by the obtaining means or a specification data set which specifies a substitute image substitutable for the camera image, to be transmitted through the transmission/reception means.

### (6) Modification 6

In the above embodiment, communications made between two mobile communication terminals 10 are TV phone communications based on TV phones, i.e., communications using images and voice messages. However, communications made between the two mobile communication terminals 10 are not limited to TV phone communications. For example, a communication which uses text (text messages) in place of voice messages, as in a so-called chat, may be made between two mobile communication terminals 10. In this example, when an avatar displayed in a virtual space moves to a particular area as described previously[S1], the avatar image displayed in the virtual space is then switched to a camera image data set. The number of mobile communication terminals 10 which transmit/receive images and messages is not limited to two, but may be three or more.

### (7) Modification 7

In the above embodiment, both of two mobile communication terminals 10 are instructed to carry out switching between an avatar image and a camera image. However, an instruction to switch images need not always be given to both of the two mobile communication terminals 10, but may be given to only one of the two mobile communication terminals 10. For example, there is a case that a special setting is made for each mobile communication terminal 10. Such a case is that a communication partner at a transmission destination is always allowed to display a camera image of a communication partner at a transmission source or that a communication partner at a transmission source who would not like to show an own camera image to a communication partner at a transmission destination always allows the communication partner at the transmission destination to display a substitute image representing the communication partner as the transmission source. In such a case, the control device 30 performs switching between an avatar image and a camera image only for the mobile communication terminal 10 as the transmission destination.

### (8) Other Modifications

The substitute image is not limited to an avatar image which is cited merely as an example in the above embodiment, but may be any image which can be substituted for a camera image.

Also in the embodiment, whenever camera images are switched to avatar images or vise versa, the users of the mobile communication terminals 10 are asked to confirm whether presently displayed images may be switched. However, such confirmation may be omitted. That is, images may be switched immediately upon satisfaction of a requirement for switching images, without confirmation from users.

In the embodiment, a virtual space provided by the control device 30 is used to allow a user to look for a communication partner to make a TV phone communication. However, the method for looking for a communication partner or, in other words, the method for specifying a communication partner, is not limited to a method using a virtual space as described above. A communication partner may be specified by any method insofar as a phone number of a user as a communication partner or a user ID in place of the phone number may be provided by any means for a user who is looking for a communication partner by the method and insofar as the user who is looking for a communication partner may make a call using the phone number or the user ID.

The above embodiment has been described with reference to an example in which the mobile communication terminals 10 are mobile phones. However, the mobile communication terminals 10 may be any communication terminals other than mobile phones. For example, other available communication terminals are portable communication terminals such as PDAs (Personal Digital Assistants), wired phones, and/or computer devices such as personal computers. If such communication terminals do not use a mobile communication network, any other network such as the internet may be used instead of a mobile communication network. In addition, pickup units need not always be built into such communication terminals but the communication terminals may be configured to be externally supplied with a camera image data set. Similarly, a microphone and/or a loudspeaker may be provided externally.

Also, the above embodiment has been described with reference to an example in which the data set transmitted in the step Sa1 from the mobile communication terminal 10A includes data indicating a phone number. However, the data set need not always include data indicating a phone number, but may include any data so long as the data is information capable of uniquely specifying a mobile communication terminal 10. In this case, the control device 30 makes an inquiry to a service control station on the basis of such information, to obtain a phone number.

The functions of the control device 30 may be allotted to plural devices. Specifically, a mobile communication system may include a storage device, an obtaining device, a determination device, and a control device. The storage device stores plural words. The obtaining device obtains messages which are transmitted/received between first and second communication terminals. The first and second communication terminals transmit/receive images and messages, and display the images. The determination device determines whether any of the plural words stored in the storage device is identical or similar to words included in the messages obtained by the obtaining device. The control device causes one of the first and second communication terminals to display a camera image or a substitute image substitutable for the camera image, depending on a determination result by the determination device.

In the above embodiment, the control device 30 is a device separate from nodes (such as service control stations and switching centers) in the mobile communication network. However, the control device 30 may be incorporated in any of the nodes in the mobile communication network.

Each of the functions performed by the control device 30 may be provided in the form of a single program. Such a program may be provided in the form of a recording medium storing the program, or may be downloaded from another control device 30 through a network such as the internet.

## Claims

1. A control device, comprising:
a word storage means that stores a plurality of words;
an obtaining means that obtains messages which are transmitted/received together with images between first and second communication terminals;
a determination means that determines whether any of the plurality of words stored in the storage means is identical or similar to any of words included in the messages obtained by the obtaining means; and
a control means that causes one or each of the first and second communication terminals to display either a camera image or a substitute image which is transmitted from the other of the first and second communication terminals, depending on a determination result of the determination means, the substitute image being substitutable for the camera image.

2. The control device according to Claim 1, wherein
the control means is configured to cause the one or each of the first and second communication terminals to display the substitute image when transmission/reception of the images and messages is started between the first and second communication terminals; and
after once causing the one or each of the first and second communication terminals to display the substitute image, the control means is configured to cause the one or each of the first and second communication terminals to display the camera image if any of the plurality of words stored in the word storage means is identical or similar to any of the words included in the messages obtained by the obtaining means.

3. The control device according to Claim 2, further comprising
a history storage means that stores a history of transmission/reception between the first and second communication terminals, wherein
if transmission/reception of the images and messages is started between the first and second communication terminals when the history of transmission/reception is not yet stored in the history storage means, the control means is configured to cause the one or each of the first and second communication terminals to display the substitute image, or if transmission/reception of the images and messages is started between the first and second communication terminals when the history of transmission/reception has been stored in the history storage means, the control means is configured to cause the one or each of the first and second communication terminals to display the camera image.

4. The control device according to Claim 1, wherein
the control means causes the one or each of the first and second communication terminals to display the camera image when transmission/reception of the images and messages is started between the first and second communication terminals; and
after once causing the one or each of the first and second communication terminals to display the camera image, the control means causes the one or each of the first and second communication terminals to display the substitute image if any of the plurality of words stored in the word storage means is identical or similar to any of the words included in the messages obtained by the obtaining means.

5. The control device according to Claim 1, wherein
each of the first and second communication terminals is configured to store the substitute image to be displayed on the other of the first and second communication terminals as a transmission destination of the images and messages from the each of the first and second communication terminals;
in a case of causing the one or each of the first and second communication terminals to display the camera image, the control means is configured to instruct the other of the first and second communication terminals to transmit the camera image and the messages, the camera image being shot by the other of the first and second communication terminals; and
in a case of causing the one or each of the first and second communication terminals to display the substitute image, the control means is configured to instruct the other of the first and second communication terminals to transmit the substitute image and the messages, the substitute image being stored in the other of the first and second communication terminals.

6. The control device according to Claim 1, wherein
each of the first and second communication terminals comprises an image storage that stores a plurality of substitute images, each of which can be displayed as the substitute image on the other of the first and second communication terminals;
in a case of causing the one or each of the first and second communication terminals to display the camera image, the control means is configured to instruct the other of the first and second communication terminals to transmit the camera image and the messages, the camera image being shot by the other of the first and second communication terminals; and
in a case of causing the one or each of the first and second communication terminals to display the substitute image, the control means is configured to notify the one or each of the first and second communication terminals, of one of the plurality of substitute images, which is specified by the other of the first and second communication terminals, and is configured to instruct the one or each of the first and second communication terminals to display the notified one of the plurality of substitute images stored in the image storage means of the one or each of the first and second communication terminals.

7. The control device according to Claim 1, further comprising
a substitute image storage means that stores substitute images to be displayed, each as the substitute image, respectively on the first and second communication terminals;
in a case of causing the one or each of the first and second communication terminals to display the camera image, the control means is configured to instruct the other of the first and second communication terminals to transmit the camera image and the messages, the camera image being shot by the other of the first and second communication terminals; and
in a case of causing the one or each of the first and second communication terminals to display the substitute image, the control means is configured to read the substitute image from among the substitute images stored in the substitute image storage means, and is configured to transmit the substitute image to the one or each of the first and second communication terminals.

8. The control device according to Claim 8, wherein
the substitute images stored in the substitute image storage means are associated with identifiers assigned to the first and second communication terminals, respectively; and
in the case of causing the one or each of the first and second communication terminals to display the substitute image, the control means is configured to read one of the substitute images associated with one of the identifiers which is assigned to the other of the first and second communication terminals, and is configured to transmit the read one of the substitute images to the one or each the first and second communication terminals.

9. A mobile communication system, comprising:
a word storage device that stores a plurality of words;
an obtaining means that obtains messages which are transmitted/received together with images between first and second communication terminals;
a determination device that determines whether any of the plurality of words stored in the storage device is identical or similar to any of words included in the messages obtained by the obtaining device; and
a control device that causes one or each of the first and second communication terminals to display either a camera image or a substitute image which is transmitted from the other of the first and second communication terminals, depending on a determination result by the determination device, the substitute image being substitutable for the camera image.

10. A communication terminal, comprising:
an obtaining means that obtains a camera image shot by a pickup means;
a substitute image storage means that stores a substitute image which is substitutable for the camera image;
a transmission/reception means that transmits/receives images and messages to/from another mobile communication terminal as a communication partner;
a display means that displays the images received by the transmission/reception means;
a word storage means that stores a plurality of words;
a determination means that determines whether any of the plurality of words stored in the word storage means is identical or similar to any of words included in the messages received by the transmission/reception means; and
a selection means that selects one of the camera image obtained by the obtaining means and the substitute image stored in the substitute image storage means, depending on a determination result by the determination means, the selected one of the camera image and the substitute image to be transmitted through the transmission/reception means.

11. A communication terminal, comprising:
an obtaining means that obtains a camera image shot by a pickup means;
a transmission/reception means that transmits/receives images and messages to/from another mobile communication terminal as a communication partner;
a display means that displays the images received by the transmission/reception means;
a storage means that stores a plurality of words;
a determination means that determines whether any of the plurality of words stored in the storage means is identical or similar to any of words included in the messages received by the transmission/reception means; and
a selection means that selects one of the camera image obtained by the obtaining means and a specification data set which specifies a substitute image substitutable for the camera image, depending on a determination result by the determination means, the selected one of the camera image and the specification data set to be transmitted through the transmission/reception means.

12. The communication terminal according to claim 11, further comprising
a substitute image storage means that stores a plurality of substitute images each of which can be displayed as the substitute image, wherein
the display means is configured to display one of the plurality of substitute images stored in the substitute image storage means, which is specified by the specification data set received by the transmission/reception means, in place of one of the images received by the transmission/reception means.
